# EUROPEAN PATENT APPLICATION

(11) **EP 3 457 707 A1**
(43) Date of publication of application: **20.03.2019**
(21) Application number: 18194971.0
(22) Date of filing: 18.09.2018
(51) Int. Cl.: H04N 21/8549, H04N 21/845, H04N 21/4788, H04N 21/433

(54) **INTELLIGENT FILTERING AND PRESENTATION OF VIDEO CONTENT SEGMENTS BASED ON SOCIAL MEDIA IDENTIFIERS**

(30) Priority: 19.09.2017 US 201762560308 P; 13.06.2018 US 201816007123
(71) Applicant: Sling Media L.L.C., Foster City, CA 94404 (US)
(72) Inventor: LEE, Aaron, Foster City, CA California 94404 (US)
(74) Representative: LKGLOBAL Lorenz & Kopf PartG mbB Patentanwälte

(57) **Abstract**

A database system is operated to identify segments of a video program by: reviewing social media content published during the broadcast of the program, or during a time period immediately following the broadcast; generating statistics related to use of a particular referencing identifier contained in the reviewed content, wherein the identifier is contextually related to subject matter of the program; identifying, from the statistics, an active time period corresponding to a statistically significant increase in usage of the identifier; creating a data object that indicates the start and end times for a segment of the program, wherein the creating correlates the active time period with the start and end times; and providing access to the data object upon request from a device, to enable the device to process a recorded version of the video program using the data object to selectively present the segment of the program.

## Description

### CROSS-REFERENCE TO RELATED APPLICATION

This application claims the benefit of United States provisional patent application number 62/560,308, filed September 19, 2017 and of United States patent application number 16/007,123, filed June 13, 2018.

### TECHNICAL FIELD

Embodiments of the subject matter described herein relate generally to video delivery systems. More particularly, embodiments of the subject matter relate to the identification of segments in a recorded video program, based on the analysis of social media feeds.

### BACKGROUND

Most television viewers now receive their video signals through a content aggregator such as a cable or satellite television provider. Digital video broadcasting (DVB) systems, such as satellite systems, are generally known. A DVB system that delivers video service to a home will usually include a video services receiver, system, or device, which is commonly known as a set-top box (STB). In the typical instance, encoded television signals are sent via a cable or wireless data link to the viewer's home, where the signals are ultimately decoded in the STB. The decoded signals can then be viewed on a television or other appropriate display as desired by the viewer. Time-shifting and recording technologies allow a user to delay the presentation of a broadcast or live video program event, such that a time-delayed version of the program event can be viewed at a convenient time. Such time-shifting technologies include digital video recording, buffering, and the like. For example, a user might record a live sports program or other broadcast video event for viewing at any time in the future.

Social media services and applications allow participants to create and publish messages, posts, and commentary in real-time or in virtually real-time. Moreover, social media services and applications may allow video networks, content providers, program events, and fictional characters that appear in program events to join the social networks as participants. For example, THE HISTORY CHANNEL could be a user of a social media platform such as FACEBOOK, TWITTER, or INSTAGRAM. Similarly, a recurring show or program, such as THE BIG BANG THEORY could have a TWITTER, FACEBOOK, and/or INSTAGRAM account. Likewise, a special event, such as THE GRAMMY AWARDS or THE SUPER BOWL, may have an associated TWITTER, FACEBOOK, and/or INSTAGRAM account that is only active for a limited period of time that surrounds the actual event date. These and other types of social media accounts can be used for marketing, advertising, public relations, and "fan interaction" purposes. For example, identifiers can be established to allow baseball fans and commentators to publish social media messages related to Major League Baseball's 2017 World Series by including an appropriate handle, username, or hashtag in the message content (e.g., @worldseries2017, #2017worldseries, or #MLB2017). Social media messages or posts (which are published in real-time or virtually real-time immediately after they are created) referring to a particular video program event will be substantially synchronized in time with the video content if the event is a live broadcast event, e.g., a live sporting event, a live concert, the original or initial broadcast of a network program, a live awards ceremony, a live newscast, or the like.

Accordingly, it is desirable to have a system and methodology that employs data analytics to determine social media trends and user activity relative to broadcast video programming. In addition, it is desirable to have a system and methodology for identifying potentially interesting or popular segments of a video program event, based on a review of social media content generated contemporaneously with the broadcast of the video program event. Furthermore, other desirable features and characteristics will become apparent from the subsequent detailed description and the appended claims, taken in conjunction with the accompanying drawings and the foregoing technical field and background.

### BRIEF SUMMARY

This is solved by the subject-matter of the independent claims; further embodiments are incorporated in the dependent claims.

Disclosed here is a method of operating a computer-implemented database system to identify segments of a video program event for selective playback, the video program event having an original broadcast time period. An embodiment of the method involves: reviewing, with the database system, content in a social media data feed, wherein publication of the content occurs during the original broadcast time period of the video program event, or during a limited period of time immediately following the original broadcast time period of the video program event; generating, with the database system, statistics related to use of a particular referencing identifier contained in the reviewed content, wherein the particular referencing identifier is contextually related to subject matter of the video program event; identifying, from the generated statistics, an active period of time corresponding to a statistically significant increase in usage of the particular referencing identifier, wherein the identifying is performed by the database system; creating, with the database system, a boundary-defining data object that indicates a segment start time and a segment end time for a segment of the video program event, wherein the creating correlates the active period of time with the segment start time and the segment end time; and providing access to the boundary-defining data object upon request from a video services device, to enable the video services device to process a recorded version of the video program event using the boundary-defining data object to selectively present the segment of the video program event.

According to an example, the particular referencing identifier comprises a hashtag, a username mention, a metadata tag, or any combination thereof. Alternatively, or in addition, as an option, the generated statistics includes a measure of a number of times the particular referencing identifier is used per unit of time.

According to an example, the active period of time is characterized by a peak activity time; and the creating step applies a first time offset to the peak activity time to obtain the segment start time; and the creating step applies a second time offset to the peak activity time to obtain the segment end time.

According to an example, the active period of time is characterized by an activity start time; and the creating step applies a first time offset to the activity start time to obtain the segment start time; and the creating step applies a second time offset to the activity start time to obtain the segment end time.

According to an example, the active period of time is characterized by an activity end time; and the creating step applies a first time offset to the activity end time to obtain the segment start time; and the creating step applies a second time offset to the activity end time to obtain the segment end time.

According to an example, the providing step comprises downloading the boundary-defining data object to the video services device.

Also disclosed here is a computer-implemented database system including: a processor device; and a non-transitory computer readable medium operatively associated with the processor device, the computer readable medium having executable instructions configurable to cause the processor device to perform a method of identifying segments of a video program event for selective playback. An embodiment of the method involves: reviewing content in a social media data feed, wherein publication of the content occurs during an original broadcast time period of the video program event, or during a limited period of time immediately following the original broadcast time period of the video program event; generating statistics related to use of a particular referencing identifier contained in the reviewed content, wherein the particular referencing identifier is contextually related to subject matter of the video program event; identifying, from the generated statistics, an active period of time corresponding to a statistically significant increase in usage of the particular referencing identifier; creating a boundary-defining data object that indicates a segment start time and a segment end time for a segment of the video program event, wherein the creating correlates the active period of time with the segment start time and the segment end time; and storing the boundary-defining data object, to enable a video services device to process a recorded version of the video program event using the boundary-defining data object to selectively present the segment of the video program event.

According to an example of the database system, the particular referencing identifier comprises a hashtag, a username mention, a metadata tag, or any combination thereof. Alternatively, or in addition, the generated statistics includes a measure of a number of times the particular referencing identifier is used per unit of time.

According to an example of the database system, the active period of time is characterized by a peak activity time; and the creating step applies a first time offset to the peak activity time to obtain the segment start time; and the creating step applies a second time offset to the peak activity time to obtain the segment end time.

According to an example of the database system, the active period of time is characterized by an activity start time; and the creating step applies a first time offset to the activity start time to obtain the segment start time; and the creating step applies a second time offset to the activity start time to obtain the segment end time.

According to an example of the database system, the active period of time is characterized by an activity end time; and the creating step applies a first time offset to the activity end time to obtain the segment start time; and the creating step applies a second time offset to the activity end time to obtain the segment end time.

According to an example of the database system, the method performed by the processor device further comprises downloading the boundary-defining data object to the video services device.

Also disclosed here is a method of operating a computer-implemented system to identify segments of a video program event for selective playback, the video program event having an original broadcast time period. An embodiment of the method involves: processing, with the computer-implemented system, a recorded version of the video program event; and receiving, at the computer-implemented system, boundary-defining data that indicates a segment start time and a segment end time for a segment of the video program event. The boundary-defining data is created by: generating statistics related to use of a particular referencing identifier contained in content published in a social media feed, wherein publication of the content occurs during the original broadcast time period of the video program event, or during a limited period of time immediately following the original broadcast time period of the video program event; and identifying, from the generated statistics, an active period of time corresponding to a statistically significant increase in usage of the particular referencing identifier, wherein the active period of time is correlated with the segment start time and the segment end time. The method continues by obtaining the segment of the video program event from the recorded version of the video program event, using the segment start time and the segment end time received with the boundary-defining data.

According to an example, the method is further comprising generating, with the computer-implemented system, a request for the boundary-defining data in response to processing the recorded version of the video program event.

Alternatively, or in addition, according to a further example, the method comprises creating, from the recorded version of the video program event, a video file corresponding to the identified segment of the video program.

Alternatively, or in addition, according to a further example, the method comprises presenting the obtained segment of the video program separately from a remaining portion of the recorded version of the video program event.

This summary is provided to introduce a selection of concepts in a simplified form that are further described below in the detailed description. This summary is not intended to identify key features or essential features of the claimed subject matter, nor is it intended to be used as an aid in determining the scope of the claimed subject matter.

### BRIEF DESCRIPTION OF THE DRAWINGS

A more complete understanding of the subject matter may be derived by referring to the detailed description and claims when considered in conjunction with the following figures, wherein like reference numbers refer to similar elements throughout the figures.
FIG. 1 is a block diagram that illustrates an exemplary embodiment of a video delivery system that includes a video services device;
FIG. 2 is a diagram that illustrates trending social media activity correlated with a broadcast of a video program event;
FIG. 3 is a flow chart that illustrates an exemplary embodiment of a method of operating a database system to identify segments of a video program event; and
FIG. 4 is a flow chart that illustrates an exemplary embodiment of a method of operating a system to identify and isolate segments of a video program event for selective playback.

### DETAILED DESCRIPTION

The following detailed description is merely illustrative in nature and is not intended to limit the embodiments of the subject matter or the application and uses of such embodiments. As used herein, the word "exemplary" means "serving as an example, instance, or illustration." Any implementation described herein as exemplary is not necessarily to be construed as preferred or advantageous over other implementations. Furthermore, there is no intention to be bound by any expressed or implied theory presented in the preceding technical field, background, brief summary or the following detailed description.

Techniques and technologies may be described herein in terms of functional and/or logical block components, and with reference to symbolic representations of operations, processing tasks, and functions that may be performed by various computing components or devices. Such operations, tasks, and functions are sometimes referred to as being computer-executed, computerized, software-implemented, or computer-implemented. It should be appreciated that the various block components shown in the figures may be realized by any number of hardware, software, and/or firmware components configured to perform the specified functions. For example, an embodiment of a system or a component may employ various integrated circuit components, e.g., memory elements, digital signal processing elements, logic elements, look-up tables, or the like, which may carry out a variety of functions under the control of one or more microprocessors or other control devices.

When implemented in software or firmware, various elements of the systems described herein are essentially the code segments or instructions that perform the various tasks. In certain embodiments, the program or code segments are stored in a tangible processor-readable medium, which may include any medium that can store or transfer information. Examples of a non-transitory and processor-readable medium include an electronic circuit, a semiconductor memory device, a ROM, a flash memory, an erasable ROM (EROM), a floppy diskette, a CD-ROM, an optical disk, a hard disk, or the like. The software that performs the described functionality may reside and execute at a host device, such as a video services receiver, a mobile device, or a home entertainment component, or it may be distributed for execution across a plurality of physically distinct devices, systems, or components, as appropriate for the particular embodiment.

The following description relates to a video delivery system that is suitably configured to process audio/visual content for presentation to a user. Although the following description focuses on video content conveyed in a video stream, the subject matter may also be utilized to handle audio content conveyed in an audio stream, such as a broadcast radio program, a streaming music channel, or the like.

The exemplary embodiments described below relate to a video delivery system such as a satellite television system, a cable delivery system, an Internet-based streaming content delivery system, a cellular network delivery system, or the like. The disclosed subject matter relates to a system and related methodology for processing a recorded version of a video program event to identify and "filter" out certain segments that might be of particular interest to a user. More specifically, the methodology presented herein analyzes social media posts, messages, and content (available in data feeds from various social media services or providers) to correlate certain periods of high social media activity with particular segments of the recorded video program event. The system assumes that the identified segments might be of interest to viewers. Accordingly, the identified segments can be designated using a supplemental data object, a metadata object, or the like, to facilitate selective playback of the identified segments on demand.

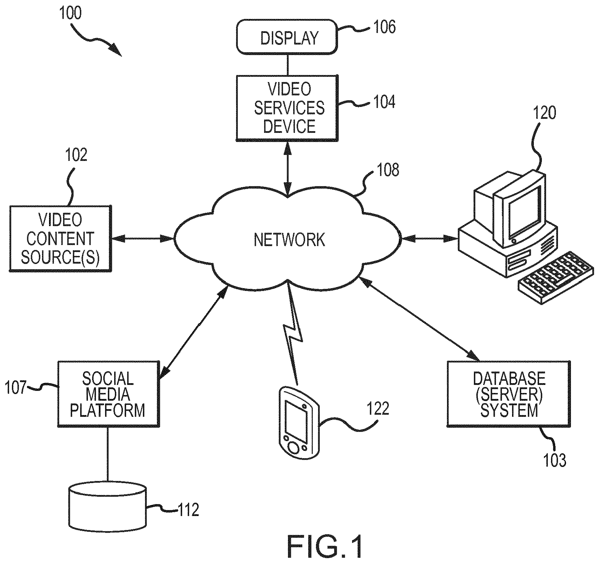

FIG. 1 is a block diagram that illustrates an exemplary embodiment of a video delivery system 100 that is suitably configured to support the techniques and methodologies described in more detail below. The system 100 (which has been simplified for purposes of illustration) generally includes, without limitation: at least one video content source 102 (referred to in the singular form herein for the sake of convenience); a computer-implemented database system 103; a video services device 104 or other form of customer equipment that is capable of receiving, processing, and rendering video content; a display 106 operatively coupled to the video services device 104; and a social media platform 107 (which may be realized using any suitable system configuration or architecture, which may include one or more distributed or co-located components). In certain embodiments, the video content source 102, the database system 103, the video services device 104, and the social media platform 107 communicate using a data communication network 108. For the sake of brevity, conventional techniques related to satellite, cable, and Internet-based communication systems, video broadcasting systems, data transmission, signaling, network control, and other functional aspects of the systems (and the individual operating components of the systems) may not be described in detail herein.

The data communication network 108 is any digital or other communications network capable of transmitting messages between senders (e.g., the video content source 102 or the social media platform 107) and receivers (e.g., the video services device 104). In various embodiments, the network 108 includes any number of public or private data connections, links or networks supporting any number of communications protocols. The network 108 may include the Internet, for example, or any other network based upon TCP/IP or other conventional protocols. In various embodiments, the network 108 also incorporates a wireless and/or wired telephone network, such as a cellular communications network for communicating with mobile phones, personal digital assistants, and/or the like. The network 108 may also incorporate any sort of wireless or wired local area networks, such as one or more IEEE 802.3 and/or IEEE 802.11 networks.

The system 100 may include or cooperate with any number of video content sources 102; FIG. 1 and this description refer to only one video content source 102 for the sake of simplicity. Moreover, a given video services provider (e.g., a satellite video provider, a cable television provider, a telecommunication services provider, or the like) could maintain, provide, or otherwise cooperate with any number of video content sources 102 designed to support any number of subscribers.

In certain embodiments, the video content source 102 may be deployed as a head end facility and/or a satellite uplink facility for the system 100. In some embodiments, the video content source 102 may include or cooperate with one or more web-based content delivery applications, services, or providers. The video content source 102 generally functions to control content, signaling data, programming information, and other data sent to any number of receiving components. In practice, the video content source 102 may also provide content and data that can be used to populate an interactive electronic program guide (EPG) generated by the video services device 104.

The video content source 102 includes one or more data processing systems or architectures that are capable of producing signals that are transmitted to customer premise equipment, mobile devices, computer systems, or the like. In various embodiments, the video content source 102 represents a satellite, cable, or other content distribution center having: a data control system for controlling content, signaling information, blackout information, programming information, and other data; and a control system for transmitting content, signaling information, blackout information, programming information, and other data using high-bandwidth links. These systems may be geographically, physically and/or logically arranged in any manner, with data control and uplink control being combined or separated as desired.

The video services device 104 represents one exemplary embodiment of a video presentation system, device, component, or module that is suitable for use in the system 100. The video services device 104 can be realized as any device, system or logic capable of receiving signals from the video content source 102. Accordingly, the video services device 104 may include a receiver interface to receive data associated with video services, including any number of video events that are provided by various video providers. In accordance with certain embodiments, the receiver interface may also be utilized to access and receive social media content (e.g., messages, posts, content feeds, information streams, and the like) from one or more social media platforms 107. In this regard, the video services device 104 may include or cooperate with a web browser application that provides access to various Internet-based services and resources, including social media applications, streaming media websites, audio/video content providers, and the like.

To support traditional video delivery functions, the video services device 104 is capable of providing demodulated content to a customer via the display 106. Accordingly, the video services device 104 may include a suitable display interface for the display 106, where the display interface facilitates presentation of video and image content on the display 106. The display 106 may be realized as any of the following, without limitation: a television set; a monitor; a computer display; or any suitable customer appliance with compatible display capabilities. In various embodiments, the video services device 104 is implemented as a set-top box (STB) as commonly used with digital video broadcasting, satellite, or cable television distribution systems. In other embodiments, however, the functionality of the video services device 104 may be commonly housed within the display 106 itself. In still other embodiments, the video services device 104 is a portable device that may be transportable with or without the display 106. The video services device 104 may also be suitably configured to support broadcast television reception, video game playing, personal video recording and/or other features as desired.

During typical operation, the video services device 104 receives programming (broadcast events, on-demand video events, streaming media, emergency broadcasts, etc.), signaling information, and/or other data via the network 108. The video services device 104 then demodulates, decompresses, descrambles, and/or otherwise processes the received digital data, and then converts the received data to suitably formatted video signals that can be rendered for viewing by the customer on the display 106. The video services device 104 may also be capable of receiving web-based content via the network 108, the Internet, etc., and may also be capable of recording and playing back video content. In certain scenarios, the video services device 104 can be utilized as a playback system for digital media files (e.g., streaming media content) that convey recorded versions of original video program events. For example, an end user device could be used to download and present a video clip posted on the Internet (e.g., using the well-known YOUTUBE video sharing service), where the video clip is a recorded version of a show that has already been broadcast.

The video services device 104 may include digital video recorder functionality that supports conventional video recording, storage, and playback features. Accordingly, the video services device 104 may include or cooperate with flash memory, a hard disk, a removable disk, or any other form of storage medium known in the art that can store recorded video content.

The social media platform 107 represents the hardware, software, processing logic, and architecture associated with one or more social media websites, services, applications, and/or providers. FIG. 1 depicts the social media platform 107 in a simplified manner for ease of description and illustration. In practice, the system 100 may include or cooperate with any number of different social media platforms 107 as needed or desired. For example, one social media platform 107 may be associated with the TWITTER social media service, another social media platform 107 may be associated with the INSTAGRAM social media service, etc.

The social media platform 107 includes or cooperates with a suitably configured database system 112 that maintains, organizes, and provides data used in association with the social media platform 107. In this regard, the data maintained by the database system 112 may include any type of social media content, information, and/or metadata. For example, the database system 112 may store social media messages and content that is published by the social media platform 107. As used here, content contained in a social media data feed may include any or all of the following items, without limitation: text messages; short message service (SMS) items; picture messages; video clip messages; social network posts; social network comments; comment threads; and the like. In certain non-limiting embodiments, the social media platform 107 corresponds to the TWITTER social media service, and the database system 112 is suitably configured to store user messages generated by the TWITTER service (i.e., "tweets"). Alternatively or additionally, the social media platform 107 corresponds to other social media services, platforms, or providers, and the database system 112 is suitably configured to store user posts, messages, and content generated by such services, platforms, or providers. Thus, the social media platform 107 can maintain and provide access to one or more feeds that include the social media messages of interest.

The database system 103 can be implemented as a centralized system or as a distributed computing architecture. The database system 103 functions as a central processing component that serves the needs of the video services device 104 and any number of similarly configured additional video services devices 104 associated with different users of the system 100. The database system 103 is suitably configured to perform certain processes, methods, and tasks associated with the analysis of social media content, as described in more detail below. To this end, the database system 103 can access, download, or otherwise obtain content in a social media data feed, wherein the content is generated or provided by the social media platform 107. Thus, at least some of the social media data maintained by the database system 112 could be accessed, downloaded, or retrieved by the database system 103.

Although not separately depicted in FIG. 1, the video services device 104, the video content source 102, and/or another component in the system 100 may include video place-shifting functionality, or it may cooperate with a suitably configured place-shifting device or component to place-shift video content. In this regard, it may be possible to provide live or recorded content to a remote device operated by the user, wherein the video services device 104, the video content source 102, and/or another component in the system 100 serves as a source of the place-shifted content.

Although not required, the system 100 may support additional video presentation devices that enable the viewer to enjoy video programming at different locations. In this regard, the video services device 104 may be considered to be a primary video delivery device, especially if it is realized as a conventional STB that is connected to a monitor or television set in the user's home. The user may also own or operate a computing device 120 that is configured to receive and present video content. The user may also own or operate a mobile device 122 that is configured to receive and present video content. The computing device 120 may be realized using any compatible platform, including, without limitation: a desktop computer; a laptop computer; a tablet computer; a smart television device; a video game console; or any suitably configured piece of electronic equipment. The mobile device 122 may be realized using any compatible platform, including, without limitation: a smartphone; a digital media player; a handheld navigation device; a portable medical device; a smart wristwatch or other wearable computing device; or the like. These additional presentation devices may also cooperate with the social media platform 107 to access and provide social media messages to the user.

It should be appreciated that the computing device 120, the mobile device 122, and/or other devices operating in the system 100 may include or cooperate with a database system that maintains some or all of the social media messages of interest (as described above with reference to the database system 112). In typical scenarios, however, a remote device will simply tap into the social media message feeds provided by the social media service providers. For example, a user device may include a suitably written and formatted application that enables the user device to access a database of social media messages that is maintained by a third party.

Moreover, the computing device 120, the mobile device 122, and/or other devices operating in the system 100 may include any number of native video processing and rendering features and functions. In this regard, the computing device 120, the mobile device 122, and/or other devices in the system 100 can be suitably configured to perform the video presentation functions described in more detail herein.

The database system 103, the video services device 104, the computing device 120, and the mobile device 122 (along with any other video presentation device that supports the methodology described herein) can be implemented as (or can be integrated with) an electronic processor-based component. Regardless of its form factor and hardware platform, a video presentation device or database system as described herein is suitably configured to support the desired features and functions using the appropriate hardware, software, firmware, etc. For example, the video services device 104 may include, without limitation: an input module or interface to receive video streams from the video content source 102; a network communication module to interface with the data communication network 108; device-specific hardware, software, firmware, and/or applications; at least one processor device; and at least one memory element having a suitable amount of storage capacity. The memory element can include or be realized as a non-transitory computer readable medium that is operatively associated with the processor device, wherein the medium includes executable instructions that are configurable to cause the processor device and the host device to perform the methods and processes described in more detail below. For example, the executable instructions can perform a method of identifying segments of a video program event for selective playback, using analyzed social media data feeds. The database system 103 can include similar hardware, software, and logic components that are programmed and configured to perform the various functions, processes, and methods described in more detail below.

The system 100 analyzes social media feeds and obtains statistics related to the use of certain referencing identifiers in the published social media content. As used here, a "referencing identifier" is a piece of text, a string, a link, one or more symbols, or one or more characters that are used by the particular social media service to identify a user of the service, a subject, a category, a group, a classification, a topic, or the like. To this end, the system 100 looks for certain predefined referencing identifiers that are contextually related to subject matter of a recorded video event. In practice, a referencing identifier may include, without limitation: a hashtag; a username mention; a metadata tag; or any combination of these. As one non-limiting example, assume that the video program event of interest is a professional basketball game between the Denver Nuggets and the Los Angeles Lakers basketball teams. Social media posts that are relevant to the game may include one or more of the following hashtags: #NBA; #DenverNuggets; #Lakers. Alternatively or additionally, social media posts related to the game may include a username mention that identifies one or more of the following social media handles or usernames: @NBABasketball; @PlayerName101; @LAL; @NuggetsBasketball. Alternatively or additionally, social media posts that are relevant to the game may include usernames that are formatted as hyperlinks or are otherwise formatted in a special manner that can be recognized by the system 100.

The methodology described here assumes that the number of contextually relevant social media posts and messages increases in a reactive manner when interesting, entertaining, exciting, funny, or otherwise notable video content is viewed. For example, if a wild animal unexpectedly appears on the field during a football or soccer game, then a statistically significant "swarm" of social media posts will usually be published during or immediately following the appearance, and those posts will typically include common or popular hashtags, username mentions, or the like. As another example, if something unusual occurs during a live broadcast of a concert by the band Radiohead, then a noticeable spike in social media posts with the hashtag #radiohead might appear at or near the time of the unusual occurrence. The system 100 relies on this expected pattern of social media behavior to identify time periods of interest during a broadcast video program event, and to correlate those time periods with respective segments of a recorded version of the program event. This correlation enables a viewer to selectively view the identified segments on demand, in a manner that is akin to viewing a series of highlight clips.

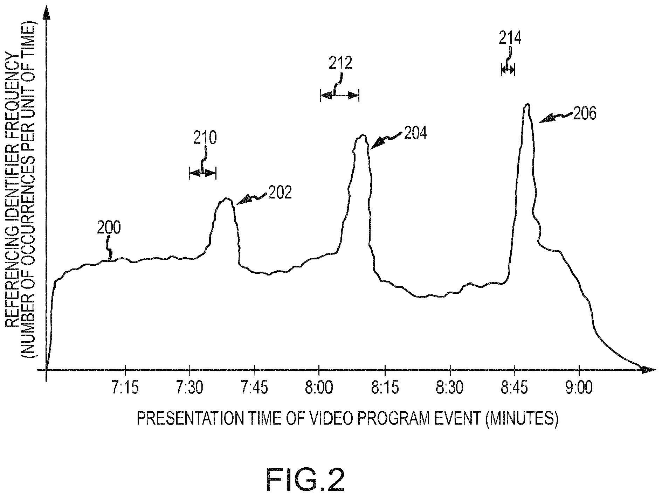

FIG. 2 is a diagram that illustrates trending social media activity correlated with a broadcast of a video program event. FIG. 2 merely serves as a visual aid for one typical scenario, and to illustrate the general concepts mentioned above. In FIG. 2, the x-axis corresponds to the presentation time of a video program event of interest (in minutes). The presentation time in this context means the actual time of broadcast in the local broadcast time zone. The y-axis corresponds to a referencing identifier frequency (which can be expressed as a number of occurrences per unit of time). In accordance with a simple and straightforward example, the plot 200 depicted in FIG. 2 corresponds to one particular referencing identifier, which is contextually related in some way to the video program event. For example, the plot 200 may track occurrences of one hashtag or one username mention (e.g., a hashtag that identifies the title or name of the video program, a username mention that identifies the title or name of the video program, or a username mention that identifies a name of a sports team or an athlete). In more robust or complex implementations, the plot 200 indicates activity associated with a plurality of different referencing identifiers that are contextually related to the video program event. For example, the plot 200 may be associated with combined statistics for a plurality of different hashtags and/or a plurality of different username mentions.

The plot 200 can be derived from information contained in any number of social media data feeds, obtained from one or more social media providers, services, vendors, platforms, or systems. In accordance with a simple embodiment, the plot 200 is derived from only one social media feed, e.g., data associated with the FACEBOOK service, data associated with the INSTAGRAM service, data associated with the TWITTER service, or the like. In other implementations, the plot 200 can include data obtained from or provided by a plurality of different social media services. Thus, the referencing identifier(s) that are considered when generating the plot 200 need not be formatted for use with only one social media platform.

The timeline in FIG. 2 roughly corresponds to a 120-minute video program broadcast time, which may or may not include commercial breaks. The vertical scale is relative, in that it can numerically represent any desired scaling or tracked quantity. For example, the y-axis may represent the number of occurrences counted in each 30-second interval, one-minute time slot, five-minute period, or the like. Thus, if the monitored referencing identifier (or identifiers) is not published at all during the video program broadcast, then the plot 200 would be zeroed across the entire x-axis. Steady non-zero portions of the plot 200 indicate a typical pattern of social media activity, with nothing unusual, exciting, or popular as the subject of social media posts or messages. In contrast, noticeable peaks and valleys in the plot 200 are indicative of increased and decreased social media activity, respectively.

The plot 200 in FIG. 2 includes three upwardly trending sections that indicate a statistically significant increase in usage of the particular referencing identifier(s) of interest. More specifically, a first statistically significant increase 202 in the plot 200 appears with a peak at a presentation time of approximately 7:38, a start time of approximately 7:33, and an end time of approximately 7:41. A second statistically significant increase 204 in the plot 200 appears with a peak at a presentation time of approximately 8:10, a start time of approximately 8:04, and an end time of approximately 8:15. A third statistically significant increase 206 in the plot 200 appears with a peak at a presentation time of approximately 8:48, a start time of approximately 8:43, and an end time of approximately 8:53. The statistically significant increases in the plot 200 appear as obvious spikes in FIG. 2.

In accordance with typical user behavior, social media posts related to a live event occur in a somewhat time-delayed manner, especially if the event is short in duration. For example, if a brief fight breaks out during a hockey game, then many viewers of the game might post comments about the game, the fight, and/or the players involved in the fight. Many of these social media messages will be published immediately following the fight, during the fight, or near the tail end of the fight. Accordingly, the system 100 described herein utilizes an intelligent timing scheme to synchronize and correlate detected upward trends in social media activity (driven by the particular referencing identifiers that relate to the video program event of interest) with the actual broadcast timing of the video program.

FIG. 2 schematically illustrates the typical publication timing that might be associated with real-time or substantially real-time social media messages during a broadcast video program event. In this regard, the event time period 210 corresponds to a portion of the video program event that initiates, prompts, or otherwise triggers the statistically significant increase 202 in the plot 200. The event time period 210 has a start time of about 7:30 and an end time of about 7:36. Notably, the statistically significant increase 202 in the plot 200 begins a short time after 7:30, peaks after 7:36, and continues thereafter. The event time period 212 has a start time of about 8:00 and an end time of about 8:09, and it corresponds to the statistically significant increase 204 in the plot. Similarly, the event time period 214 has a start time of about 8:42, an end time of about 8:45, and it corresponds to the statistically significant increase 206 in the plot 200.

The system 100 can be suitably configured to calculate/estimate the start and end times of segments in the video program event, based on certain detectable characteristics of the corresponding spikes in the plot 200. For instance, as mentioned above, a statistically significant increase in the usage of one or more referencing identifiers (that are monitored for the particular video program event) will usually begin during or shortly following the occurrence of something of interest. Moreover, the amount of social media activity that includes the referencing identifier(s) tends to peak during or immediately following the occurrence of something of interest. In addition, usage of the referencing identifier(s) usually decreases and settles to a nominal level following the conclusion of the triggering event. Accordingly, the system 100 can analyze the characteristics of a statistically significant increase in the plot 200 (e.g., the peak activity time, the activity start time, the activity end time, and/or the activity duration) and then calculate, determine, estimate, or otherwise derive the segment start time and the segment end time of the video segment of interest, relative to the timing methodology or timing reference system utilized by the video program event. In other words, the system 100 generates boundary-defining data that correlates an active period of time in the monitored referencing identifier(s) with a particular segment in the video program event. The boundary-defining data can be accessed, downloaded, and applied at any time thereafter, for purposes of identifying and isolating the referenced video segment during playback of a recorded version of the video program event.

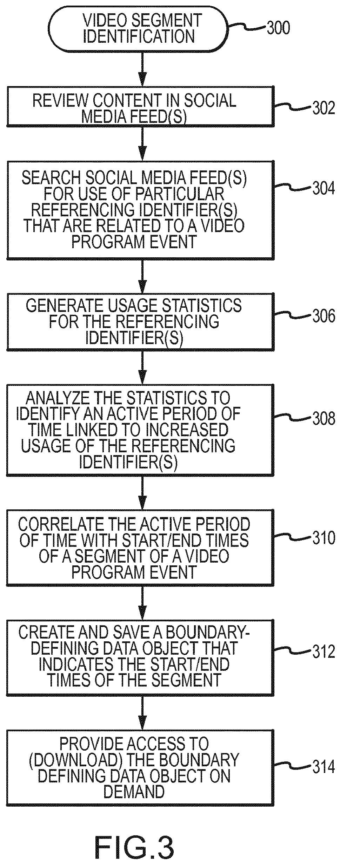

Referring again to the figures, FIG. 3 is a flow chart that illustrates an exemplary embodiment of a process 300, which can be performed by the system 100. The process 300 represents an embodiment of a method of operating a computer-implemented database system to identify segments of a video program event for selective playback. The various tasks performed in connection with a process described herein may be performed by software, hardware, firmware, or any combination thereof. In practice, portions of a process described herein may be performed by different elements of the described system, e.g., a video presentation device, a video services receiver or set-top box, a mobile user device, a cloud-based or server-based centralized computing system, or the like. It should be appreciated that an illustrated process may include any number of additional or alternative tasks, the tasks shown in the figures need not be performed in the illustrated order, and a process may be incorporated into a more comprehensive procedure or process having additional functionality not described in detail herein. Moreover, one or more of the tasks shown in the figures could be omitted from an embodiment of a disclosed process as long as the intended overall functionality remains intact.

The process 300 can be performed by a cloud-based database system, by a video services device, by a user's presentation device, etc. The process can be performed by only one system or device, or in certain embodiments it can be executed in a distributed manner by a plurality of different devices, systems, or components. In accordance with the embodiment contemplated here, the process 300 is performed by a computer-implemented database system that communicates with a video services device owned or operated by an end user. In certain embodiments, the process 300 is performed by a remote server-based system, such as the system 103 shown in FIG. 1. The process 300 can be performed on demand as needed for a given video program event, or it can be performed at any time after the broadcast of the video program event. The following description assumes that a particular video program event has already been identified for processing. Accordingly, at least one referencing identifier that is contextually related to the video program event has been designated for purposes of the process 300. As mentioned previously, a given video program event may have any number of referencing identifiers associated therewith, depending on various factors such as the title of the program, the names of the primary actors, the name of the director, the names of the producers, the genre or category of the program, the subject matter of the program, etc. The designation and assignment of referencing identifiers (which are deemed to be relevant to the video program event) can be performed by a human operator, by an automated system that is configured to review program-related metadata (e.g., electronic program guide data and/or descriptive data embedded in or appended to the video program data), by an intelligent expert system, or the like.

The process 300 may begin by reviewing, with the database system, content in one or more social media data feeds (task 302). The reviewing can be performed efficiently when the publication of the content of interest occurs during the original broadcast time period of the video program event, or during a limited period of time immediately following the original broadcast time period of the video program event. For example, if the video program event under consideration was originally broadcast between 7:00 PM and 8:00 PM on a given date, then the reviewing at task 302 can be limited to focus on social media posts and messages published between 7:00 PM and 8:30 PM on that date.

The social media data feed(s) are searched in an appropriate manner for use of one or more particular referencing identifiers that are related to the video program event (task 304). In this regard, a social media data feed can be searched to identify, count, or otherwise check for certain hashtags, username mentions, or the like. For this particular example, the searching at task 304 identifies each occurrence of a referencing identifier, along with a corresponding time stamp (e.g., the publication time, message post time, etc.). The searching at task 304 may count all occurrences of a referencing identifier, or it may disregard duplicate occurrences that appear in the same message, post, sentence, paragraph, message thread, or the like. Other statistical approaches, filtering, and/or conditioning of the raw social media data feed data could be implemented, depending on the particular embodiment.

The process 300 continues by generating statistics related to the use of the particular referencing identifier(s) contained in the reviewed content (task 306). Although any number of statistical references, quantities, expressions, or terms can be generated by the process 300, this particular example assumes that the generated statistics includes at least a measure that indicates a number of times a particular referencing identifier is used per unit of time during the original broadcast time period of the video program event of interest. This generated measure can be analyzed relative to the presentation time of the video program event, as depicted in FIG. 2. More specifically, the generated statistics can be analyzed to identify an active period of time (or more than one active period of time if applicable) corresponding to a statistically significant increase in usage of one or more referencing identifiers (task 308). Referring to FIG. 2, task 308 is performed to identify and locate spikes in the plot 200.

The peak activity time of a statistically significant increase in usage of a referencing identifier (i.e., a local maxima) is fairly easy to determine. The determination of the activity start time and the activity end time, however, can be more challenging. The process 300 may analyze the statistical data to identify changes in the slope of the plot 200, such that a change in the slope exceeding a predetermined amount is considered to be indicative of an activity start/end time. Alternatively or additionally, predetermined threshold values can be established, under the assumption that social media activity that exceeds a threshold value is considered to be indicative of an activity start time. It should be appreciated that a variety of statistical techniques and methodologies can be leveraged to determine the activity start and end times.

The process 300 continues by correlating each identified active period of time with a start time and an end time of a segment of the video program event (task 310). As mentioned above, an active period of time reflected in the statistical data can be correlated with a respective segment of the video program event, under the assumption that the detectable increase in activity was actually caused by the video program content as broadcast at or near the same time period. Each active period of time is characterized by a peak activity time, an activity start time, and an activity end time. In accordance with one approach, the peak activity time serves as a reference time, and the process 300 applies a first time offset to the peak activity time to obtain the segment start time, and applies a second time offset to the peak activity time to obtain the segment end time. Using this approach, the first time offset will usually be a negative time offset (i.e., backward in time), because the process 300 assumes that peak social media activity occurs during or immediately following an interesting video event. The second time offset can be set to zero, or some predetermined positive or negative time, relative to the peak activity time.

In accordance with an alternative approach, the activity start time serves as the reference time, and the process 300 applies time offsets to the activity start time to obtain the segment start and end times. Using this approach, the first time offset can be zero or a relatively small negative time offset. In contrast, the second time offset can be a positive time offset.

In accordance with an alternative approach, the activity end time serves as the reference time, and the process 300 applies time offsets to the activity end time to obtain the segment start and end times. Using this approach, the first time offset can be a relatively large negative time offset. In contrast, the second time offset can be a relatively small negative time offset.

In accordance with yet another approach, the activity start time serves as a first reference time, and the activity end time serves as a second reference time. The process 300 applies one time offset to the activity start time to obtain the segment start time, and applies another time offset to the activity end time to obtain the segment end time.

This description assumes that the process 300 successfully and accurately identifies all of the statistically significant increases in the usage of the referencing identifier(s) for the given video program event, which are properly correlated with the associated segments of the video program event. The process 300 continues by creating and storing a boundary-defining data object that indicates the segment start and end times for each identified segment of the video program event (task 312). The boundary-defining data object can be a supplemental data file, metadata, a table, an XML file, a spreadsheet file, or the like. Any number of boundary-defining data objects can be created and stored in a central network-accessible location for access and use by client devices, user systems, video presentation devices, or the like.

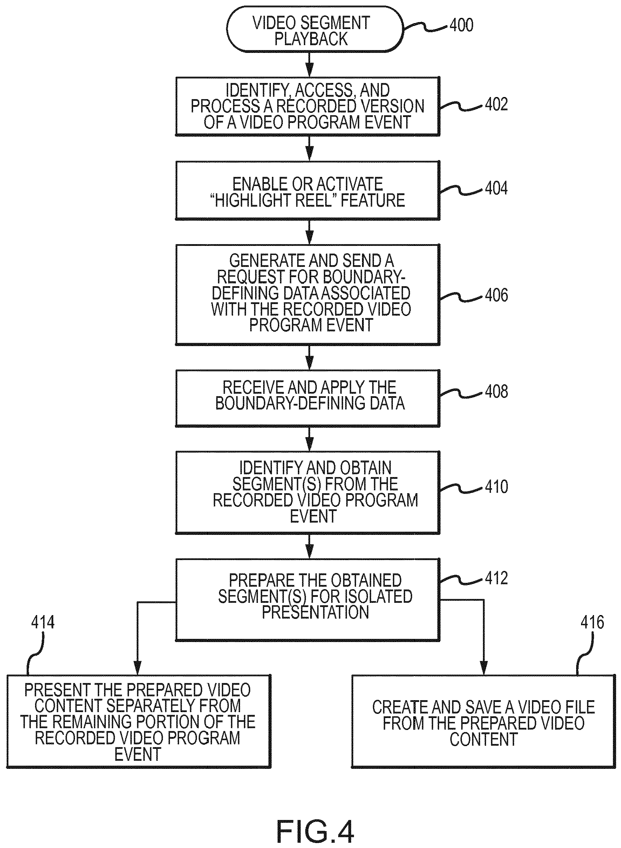

The creation of the boundary-defining data object serves to correlate at least one active period of time (as indicated by the social media data) with at least one respective segment of the video program event. Accordingly, a recorded version of the video program event having consistent and compatible timing indicators can be processed, filtered, and otherwise manipulated to identify and isolate only those segments that are implicated by the boundary-defining data object. The process 300 provides access to the boundary-defining data object upon request from a video services device, or otherwise on demand as needed (task 314). In certain embodiments, the process 300 downloads the boundary-defining data object to a requesting video presentation device, using a data communication network. As explained in more detail below with reference to FIG. 4, the boundary-defining data object is suitably configured and formatted to enable the video services device to process a recorded version of the video program event using the boundary-defining data object to selectively present the desired segment (or segments) of the video program event.

FIG. 4 is a flow chart that illustrates an exemplary embodiment of a process 400, which can be performed by the system 100. The process 400 represents an embodiment of a method of operating a computer-implemented system to identify segments of a video program event for selective playback in a manner that isolates certain interesting portions of the video program event. In accordance with the embodiment contemplated here, the process 400 is performed by a computer-implemented video presentation device that is suitably configured to communicate with a network-based database system of the type described previously.

This example assumes that the video services device is capable of identifying, accessing, and processing a recorded version of a video program event (task 402). In practice, task 402 can be initiated by a user of the video services device by navigating a list or any user interface that allows the user to select a recorded program. This example assumes that the user or an operator of the video services device enables or activates a "social media driven highlight reel" feature for the recorded version of the video program event (task 404). Task 404 can be initiated by pressing a special button on a remote control, by manipulating an appropriate user interface feature, or the like.

In response to activation of the feature, the process 400 continues by generating a request for boundary-defining data that is associated with the recorded video program event

(task 406). In accordance with the exemplary embodiment presented here, task 406 generates and sends an appropriately formatted request for a boundary-defining data object corresponding to the recorded video program event. The request can be communicated from the video presentation device to a server-based or cloud-based database system (as described previously), using established data communication methodologies. The request includes data that identifies the recorded version of the video program event such that the appropriate boundary-defining data object can be retrieved. In this regard, the program-identifying data may include, without limitation: an alphanumeric code; a string of bits; a hash value; and/or a number that identifies the original version of the video program event.

This example assumes that the request is successfully received by the database system for processing. The database system processes the request to identify the video program event of interest and to retrieve the corresponding boundary-defining data object. If a corresponding boundary-defining data object cannot be found, then an appropriate message, alert, or warning can be generated and presented at the user's video presentation device. This example assumes that the database system searches for, and finds, a boundary-defining data object for the recorded version of the video program event. As described above with reference to the process 400, the located boundary-defining data object can be provided to the requesting video presentation device.

This description assumes that the requesting video presentation device successfully receives the boundary-defining data, which is preferably conveyed in the boundary-defining data object (task 408). The boundary-defining data can be processed and applied by the video presentation device in an appropriate manner. More specifically, the segment start time and the segment end time for each video segment implicated by the boundary-defining data can be utilized to identify and obtain one or more segments of the video program event from the recorded version of that event (task 410). The process 400 continues by preparing the obtained video segments as needed for isolated presentation at the video presentation device (task 412). For example, the process 400 can control the video presentation device to facilitate presentation of the prepared video content separately from the remaining portion of the recorded version of the video program event (task 414). In practice, the identified and obtained video segments can be compiled and arranged in chronological order for presentation, while skipping the remainder of the recorded video program event. Alternatively or additionally, the process 400 can control the video presentation device to facilitate creation and saving of a video file that corresponds to the prepared video content (task 416). This "highlight" video file can be created from the recorded version of the video event for purposes of subsequent playback, for sharing with other users, or the like.

While at least one exemplary embodiment has been presented in the foregoing detailed description, it should be appreciated that a vast number of variations exist. It should also be appreciated that the exemplary embodiment or embodiments described herein are not intended to limit the scope, applicability, or configuration of the claimed subject matter in any way. Rather, the foregoing detailed description will provide those skilled in the art with a convenient road map for implementing the described embodiment or embodiments. It should be understood that various changes can be made in the function and arrangement of elements without departing from the scope defined by the claims, which includes known equivalents and foreseeable equivalents at the time of filing this patent application.

## Claims

1. A method of operating a computer-implemented database system to identify segments of a video program event for selective playback, the video program event having an original broadcast time period, the method comprising:
reviewing, with the database system, content in a social media data feed, wherein publication of the content occurs during the original broadcast time period of the video program event, or during a limited period of time immediately following the original broadcast time period of the video program event;
generating, with the database system, statistics related to use of a particular referencing identifier contained in the reviewed content, wherein the particular referencing identifier is contextually related to subject matter of the video program event;
identifying, from the generated statistics, an active period of time corresponding to a statistically significant increase in usage of the particular referencing identifier, wherein the identifying is performed by the database system;
creating, with the database system, a boundary-defining data object that indicates a segment start time and a segment end time for a segment of the video program event, wherein the creating correlates the active period of time with the segment start time and the segment end time; and
providing access to the boundary-defining data object upon request from a video services device, to enable the video services device to process a recorded version of the video program event using the boundary-defining data object to selectively present the segment of the video program event.

2. The method of claim 1, wherein the particular referencing identifier comprises a hashtag, a username mention, a metadata tag, or any combination thereof; and/or
wherein the generated statistics includes a measure of a number of times the particular referencing identifier is used per unit of time.

3. The method of claim 1 or 2, wherein:
the active period of time is **characterized by** a peak activity time;
the creating step applies a first time offset to the peak activity time to obtain the segment start time; and
the creating step applies a second time offset to the peak activity time to obtain the segment end time.

4. The method of claim 1 or 2, wherein:
the active period of time is **characterized by** an activity start time;
the creating step applies a first time offset to the activity start time to obtain the segment start time; and
the creating step applies a second time offset to the activity start time to obtain the segment end time.

5. The method of claim 1 or 2, wherein:
the active period of time is **characterized by** an activity end time;
the creating step applies a first time offset to the activity end time to obtain the segment start time; and
the creating step applies a second time offset to the activity end time to obtain the segment end time.

6. The method of one of the proceeding claims, wherein the providing step comprises downloading the boundary-defining data object to the video services device.

7. A computer-implemented database system comprising:
a processor device; and
a non-transitory computer readable medium operatively associated with the processor device, the computer readable medium comprising executable instructions configurable to cause the processor device to perform a method of identifying segments of a video program event for selective playback, the method comprising:
reviewing content in a social media data feed, wherein publication of the content occurs during an original broadcast time period of the video program event, or during a limited period of time immediately following the original broadcast time period of the video program event;
generating statistics related to use of a particular referencing identifier contained in the reviewed content, wherein the particular referencing identifier is contextually related to subject matter of the video program event;
identifying, from the generated statistics, an active period of time corresponding to a statistically significant increase in usage of the particular referencing identifier;
creating a boundary-defining data object that indicates a segment start time and a segment end time for a segment of the video program event, wherein the creating correlates the active period of time with the segment start time and the segment end time; and
storing the boundary-defining data object, to enable a video services device to process a recorded version of the video program event using the boundary-defining data object to selectively present the segment of the video program event.

8. The database system of claim 7, wherein the particular referencing identifier comprises a hashtag, a username mention, a metadata tag, or any combination thereof; and or
wherein the generated statistics includes a measure of a number of times the particular referencing identifier is used per unit of time.

9. The database system of claim 7 or 8, wherein:
the active period of time is **characterized by** a peak activity time;
the creating step applies a first time offset to the peak activity time to obtain the segment start time; and
the creating step applies a second time offset to the peak activity time to obtain the segment end time.

10. The database system of claim 7 or 8, wherein:
the active period of time is **characterized by** an activity start time;
the creating step applies a first time offset to the activity start time to obtain the segment start time; and
the creating step applies a second time offset to the activity start time to obtain the segment end time.

11. The database system of claim 7 or 8, wherein:
the active period of time is **characterized by** an activity end time;
the creating step applies a first time offset to the activity end time to obtain the segment start time; and
the creating step applies a second time offset to the activity end time to obtain the segment end time.

12. The database system of one of the claims 7 to 11, wherein the method performed by the processor device further comprises downloading the boundary-defining data object to the video services device.

13. A method of operating a computer-implemented system to identify segments of a video program event for selective playback, the video program event having an original broadcast time period, the method comprising:
processing, with the computer-implemented system, a recorded version of the video program event;
receiving, at the computer-implemented system, boundary-defining data that indicates a segment start time and a segment end time for a segment of the video program event, wherein the boundary-defining data is created by:
generating statistics related to use of a particular referencing identifier contained in content published in a social media feed, wherein publication of the content occurs during the original broadcast time period of the video program event, or during a limited period of time immediately following the original broadcast time period of the video program event; and
identifying, from the generated statistics, an active period of time corresponding to a statistically significant increase in usage of the particular referencing identifier, wherein the active period of time is correlated with the segment start time and the segment end time; and
obtaining the segment of the video program event from the recorded version of the video program event, using the segment start time and the segment end time received with the boundary-defining data.

14. The method of claim 13, wherein the particular referencing identifier comprises a hashtag, a username mention, a metadata tag, or any combination thereof; and/or
wherein the generated statistics includes a measure of a number of times the particular referencing identifier is used per unit of time.

15. The method of claim 13 or 14, further comprising:
generating, with the computer-implemented system, a request for the boundary-defining data in response to processing the recorded version of the video program event; and/or
creating, from the recorded version of the video program event, a video file corresponding to the identified segment of the video program; and/or
presenting the obtained segment of the video program separately from a remaining portion of the recorded version of the video program event.
